# EUROPÄISCHE PATENTSCHRIFT

(11) **EP 2 165 072 B1**
(45) Veröffentlichungstag und Bekanntmachung des Hinweises auf die Patenterteilung: **22.02.2012**
(21) Anmeldenummer: 08759176.4
(22) Anmeldetag: 11.06.2008
(51) Int. Cl.: F03D 7/02

(54) **ARRETIERUNGSVORRICHTUNG FÜR EINE WINDTURBINE**
LOCKING MECHANISM FOR A WIND TURBINE
DISPOSITIF D'ARRÊT POUR UNE ÉOLIENNE

(30) Priorität: 18.06.2007 EP 07090122; 05.12.2007 DE 102007058746
(43) Veröffentlichungstag der Anmeldung: 24.03.2010
(73) Patentinhaber: Suzlon Energy GmbH, 18055 Rostock (DE)
(72) Erfinder: PECHLIVANOGLOU, Georgios, 12435 Berlin (DE); WAGNER, Jürgen, 12435 Berlin (DE)
(86) Internationale Anmeldenummer: PCT/EP2008/004664
(87) Internationale Veröffentlichungsnummer: WO 2008/155053

(56) Entgegenhaltungen:
- EP-A- 1 286 049
- EP-A- 1 291 521
- WO-A-2008/059088
- DE-A1-102004 013 624
- US-A- 5 418 442
- BOSSANYI E A: "Wind Turbine Control for Load Reduction" WIND ENERGY, WILEY, CHICHESTER, GB, Bd. 6, 1. Januar 2003 (2003-01-01), Seiten 229-244, XP007909578 ISSN: 1099-1824
- HAU E ED - HAU E: "Windkraftanlagen" WINDKRAFTANLAGEN. GRUNDLAGEN, TECHNIK, EINSATZ, WIRTSCHAFTLICHKEIT, BERLIN : SPRINGER, DE, 1. Januar 1996 (1996-01-01), Seiten 318-321, XP007909909 ISBN: 978-3-540-57430-9

## Beschreibung

Die Erfindung betrifft eine Arretierungsvorrichtung für eine Windturbine, wobei eine Rotorwelle eines Triebstrangs drehbar an einem Maschinenträger der Windturbine vorgesehen ist, und die Rotorwelle mit einem Rotor verbindbar ist. Um Wartungsarbeiten an der Windturbine vornehmen zu können, weist die Arretierungsvorrichtung Verriegelungsmittel, insbesondere mit einem verschiebbaren Arretierungsbolzen auf, womit eine drehfeste Verbindung zwischen dem Rotor oder der Rotorwelle und dem Maschinenträger durch Formschluss erzeugbar ist. Dazu ist eine Drehstellung der Rotorwelle in einer SOLL-Position automatisch detektierbar, und weiterhin sind bei einem Erreichen der SOLL-Position die Verriegelungsmittel automatisch in Eingriff bringbar. Die Vorrichtung umfasst zusätzlich mindestens eine Bremsvorrichtung zur Beaufschlagung des Triebstrangs, wodurch die Drehgeschwindigkeit des Rotors und der Rotorwelle abgebremst werden kann. Solcherlei Arretierungsvorrichtungen sind deshalb notwendig, da während Wartungsarbeiten der Rotor und der Triebstrang der Windturbine aus Sicherheitsgründen formschlüssig festgestellt sein müssen. Dazu wird meist ein am Maschinenträger verschiebbar gelagerter Arretierungsbolzen in eine Aufnahme einer mit der Rotorwelle drehfest verbundenen Arretierungsscheibe eingeschoben. Dadurch werden der Rotor und die Rotorwelle drehfest mit dem Maschinenträger der Windturbine verbunden.

Die DE 10 2004 013 624 A1 offenbart eine derartige Vorrichtung, wobei ein Arretierungsbolzen in Aufnahmen einer Arretierungsscheibe eingeschoben werden kann. Dies wird automatisch bewältigt, wenn der Rotor und eine damit verbundene Arretierungsscheibe in einer SOLL-Position stehen, so dass der Arretierungs-bolzen und die Aufnahmen der Arretierungsscheibe miteinander fluchten. Dabei besteht das grundlegende Problem, dass ein Anhalten des Rotors in einer definierten und ortsgenauen SOLL-Position mit der erfindungsgemäßen Lehre und den damit offenbarten Merkmalen des genannten Dokuments schwerlich zu erreichen ist.

Dokument US 5418442 offenbart eine Vorrichtung und ein Verfahren für Drehgeschwindigkeitsmessung eines Motors, wobei eine Drehposition des Motors mittels der gemessenen Drehgeschwindigkeit erfasst wird.

Es ist eine Rufgabe der Erfindung, eine verbesserte Arretierungsvorrichtung anzugeben, welche unter anderem die Nachteile des Stands der Technik vermeidet. Insbesondere soll eine Vorrichtung dargestellt werden, welche die Verwendung und Berücksichtigung unterschiedlicher Einflussfaktoren ermöglicht. Des Weiteren ist es eine Aufgabe der Erfindung, ein Verfahren zum Betrieb einer Arretierungsvorrichtung, insbesondere zum definierten, sicheren und exakten Anhalten einer Rotorwelle in einer SOLL-Position, bereitzustellen.

Die Aufgabe wird erfindungsgemäß mit den Merkmalen des Hauptanspruchs 1 gelöst, indem Sensormittel zum Erfassen einer Drehgeschwindigkeit der Rotorwelle vorgesehen sind. Mit dieser erfindungsgemäßen Vorrichtung wird erstmals ermöglicht, mittels eines Vergleichs der momentanen Position der Rotorwelle mit der SOLL-Position, bei Kenntnis der Drehgeschwindigkeit, eine Abschätzung oder Berechnung über die benötigte Bremsleistung und/oder den Bremsweg der Bremsvorrichtung vorzunehmen, und somit eine sichere, sanfte und präzise Abbremsung der Rotorwelle bis zum Stillstand in der SOLL-Position zu realisieren. Weiterhin kann bei dieser Abschätzung auch die Massenträgheit des Rotors bzw. des gesamten rotierenden Antriebstrangs verwendet werden, da die aufzubringende Bremsenergie im Wesentlichen der gesamten Rotationsenergie des Antriebstrangs und des Rotors, abzüglich der Reibungsverluste, entspricht.

Eine sinnvolle Ausgestaltung der Erfindung lehrt, dass Sensormittel zum Erfassen einer Drehrichtung vorgesehen sind. Somit kann auch eine Abbremsung des Rotors vorgenommen werden, wenn sich der Rotor und Antriebsstrang entgegen einer Hauptdrehrichtung der Windturbine dreht.

Vorteilhafter Weise können die Sensormittel zum Erfassen der Position, der Drehgeschwindigkeit und der Drehrichtung in Form von einer Vielzahl von Rotorpositionssensoren, vorzugsweise insbesondere mittels zwei Rotorpositionssensoren, ausgebildet sein. Dabei sind diese an unterschiedlichen Stellen am Umfang der Rotorwelle oder der Arretierungsscheibe vorzusehen. Es können zusätzliche Sensormittel zum Erfassen der Position des Arretierungsbolzens oder der Verriegelungsmittel vorgesehen sein.

Eine Ausgestaltung der Erfindung beinhaltet, dass eine Bremsvorrichtung als Reibungsbremsvorrichtung ausgebildet ist, und Sensormittel zum Erfassen des Status, also unter Anderem der Betätigungskraft, des Betätigungsweges, der Temperatur und/oder des Betätigungsstroms, bei einer elektrischen Bremse, vorgesehen sind. Insbesondere kann dabei der Triebstrang ein Getriebe mit einer schnellen Abtriebswelle und einer Bremsscheibe umfassen, wobei die schnelle Abtriebswelle durch die Bremsvorrichtung beaufschlagbar ist. Dadurch werden das aufzubringende Bremsmoment und damit auch die Betätigungskraft der Bremsvorrichtung erheblich verringert.

Um ein besseres Funktionsverhalten der Arretierungsvorrichtung zu erreichen, können weitere Sensormittel zum Erfassen der Position und/oder der Drehgeschwindigkeit der schnellen Abtriebswelle oder der Bremsscheibe vorgesehen sein. Somit können durch Torsion verursachte Dehnungen und Schwingungen des Antriebsstrangs in die Abschätzungen des Abbremsvorgangs mit einfließen. Weiterhin stellt sich der Doppeleffekt ein, dass so das Funktionsverhalten des Getriebes überwacht werden kann.

Optimierend auf das Systemverhalten der Arretierungsvorrichtung wirkt es sich aus, wenn Sensormittel zum Erfassen einer Windgeschwindigkeit, zum Beispiel ein Anemometer, vorgesehen sind.

Mit diesen Daten ist es möglich, eine Abschätzung der benötigten Bremsleistung der Bremsvorrichtung vorzunehmen, da der Rotor je nach Anstellwinkel der Rotorblätter durch den Wind aerodynamisch angetrieben oder verlangsamt wird. Somit wird weiterhin die Möglichkeit eröffnet, den Anstellwinkel mindestens eines Rotorblatts des Rotors derart einzustellen, dass eine aerodynamische Bremsvorrichtung oder ein aerodynamischer Antrieb dargestellt wird. Somit ist ein auf den Triebstrang wirkendes, verzögerndes oder positiv beschleunigendes Moment erzeugbar, wobei Sensormittel zum Erfassen des Anstellwinkels vorzusehen sind.

Eine besonders günstige Ausgestaltung der Erfindung offenbart, dass eine Steuereinheit vorgesehen ist, welche mindestens mit den Sensormitteln zum Erfassen der Position, Drehrichtung, Drehgeschwindigkeit der Rotorwelle und optional des Status der Bremsvorrichtung verbunden ist. Diese Steuereinheit führt erfindungsgemäß die Daten der Sensormittel zusammen und führt die Abschätzung oder Berechnung für die Abbremsung des Triebstrangs durch. Die Steuereinheit ist mit einer aerodynamischen Brems- oder Beschleunigungs-vorrichtung - ergo mit mindestens einem Pitchantrieb eines Rotorblatts - und/oder mit einer auf Reibung basierenden Bremsvorrichtung verbunden und kann eine oder beide Bremsvorrichtungen ansteuern, um die Bremsung des Rotors bis zum Stillstand in der definierten SOLL-Position durchzuführen. Dazu ist es vorteilhaft, wenn die Steuereinheit weiterhin mit mindestens einer der folgenden Sensormitteln verbunden ist: Sensormittel zum Erfassen der Position der Verriegelungsmittel, respektive des Arretierungsbolzens, Sensormittel zum Erfassen des Status der Reibungsbremsvorrichtung, Sensormittel zum Erfassen der Position und/oder der Drehgeschwindigkeit der schnellen Abtriebswelle oder der Bremsscheibe, Sensormittel zum Erfassen einer Windgeschwindigkeit und Sensormittel zum Erfassen des Anstellwinkels mindestens eines Rotorblattes.

Im Rahmen der vorliegenden Erfindung wird weiterhin eine Windturbine offenbart, welche ein auf einem Turm drehbar gelagertes Maschinenhaus umfasst, und weiterhin einen Maschinenträger und eine Arretierungsvorrichtung nach den voran aufgeführten Ausgestaltungen mit vollständig oder teilweise verwirklichten Merkmalen aufweist.

Im Kontext der vorliegenden Erfindung wird ein Verfahren zum Betrieb einer Arretierungsvorrichtung für eine Windturbine offenbart. Dieses umfasst die Schritte, Erfassen einer Position, einer Drehrichtung und einer Drehgeschwindigkeit einer Rotorwelle der Windturbine, Vergleichen der momentanen Position der Rotorwelle mit einer SOLL-Position der Rotorwelle, und Ansteuern mindestens einer Bremsvorrichtung, um die Rotorwelle bis zum Stillstand in der SOLL-Position abzubremsen. Dabei kann zudem der Status der Bremsvorrichtung erfasst werden. Im Detail wird eine Differenz zwischen der momentanen Position und der SOLL-Position der Rotorwelle ermittelt, wobei im Zusammenhang mit der vorliegenden Drehgeschwindigkeit des Triebstrangs, der momentanen Windgeschwindigkeit und der Massenträgheit der rotierenden Teile, eine Bremskraft bzw. eine Betätigungskraft der Bremsvorrichtung ermittelt und eingestellt wird, um die Rotorwelle in exakt der SOLL-Position anzuhalten. Zusätzlich kann gleichzeitig die aerodynamische Bremsvorrichtung zur Unterstützung der Reibungsbremsvorrichtung aktiviert werden, indem nach dem Erfassen der Windgeschwindigkeit ein Anstellwinkel mindestens eines Rotorblatts derart eingestellt wird, so dass dieses Rotorblatt ein auf die Drehachse verzögernd wirkendes Moment erzeugt wird.

Dadurch eröffnet sich zudem die Möglichkeit, den Rotor einer sich im Trudelbetrieb befindlichen Windturbine zu arretieren, indem mit Hilfe eines oder mehrerer Rotorblätter der Rotor beschleunigt wird, um ihn dann mit Hilfe des oben genannten Verfahrens in der SOLL-Position anzuhalten. In diesem Kontext ist es denkbar, eine zusätzliche Drehbewegung in den Antriebsstrang einzukoppeln, beispielsweise mittels einer Handkurbel, eines Elektromotors oder sonstigen Antriebsmitteln.

Im Rahmen des erfindungsgemäßen Verfahrens kann es sinnvoll erscheinen, die Rotorwelle oder eine schnelle Abtriebswelle bereits vor dem Erreichen der SOLL-Position der Rotorwelle mindestens einmal automatisch bis zum Stillstand abzubremsen. Insbesondere ist dann die SOLL-Position zumindest teilweise durch alternierende Start- und Stoppbewegungen der Rotorwelle, oder der schnellen Abtriebswelle, anzufahren. Auf diese Weise tasten sich der Rotor und die Rotorwelle in kleinen kontrollierten Schritten an die SOLL-Position heran.

Nachdem mittels der Reibungsbremsvorrichtung und/oder der aerodynamischen Bremse, der Rotor und die Rotorwelle in SOLL-Position gebracht sind, und wenn die SOLL-Position der Rotorwelle (5) von einer Steuereinheit (100) detektiert ist, werden die Verriegelungsmittel, beispielsweise ein Arretierungsbolzen, derart in Eingriff gebracht, dass die Rotorwelle mittels Formschlusses drehfest mit dem Maschinenträger verbunden ist.

Die aufgeführten Schritte des Verfahrens sind nicht abschließend zu interpretieren. Vielmehr können sinnvolle zusätzliche Verfahrensmerkmale das erfindungsgemäße Verfahren noch erweitern und verbessern.

Weiter Einzelheiten der Erfindung gehen aus den Zeichnungen anhand der Beschreibung hervor.

In den Zeichnungen zeigt
- Fig. 1: eine perspektivische Sicht auf eine Unterseite einer ersten Ausführungsform eines Maschinenträgers einer Windturbine,
- Fig. 2: eine weitere Ansicht auf den Maschinenträger gemäß Fig. 1,
- Fig. 3: eine Frontansicht auf den Maschinenträger gemäß Fig. 1,
- Fig. 4: eine Seitenansicht auf den Maschinenträger gemäß Fig. 1,
- Fig. 5: eine schematische Darstellung der Arretierungsvorrichtung gemäß Fig. 1, und
- Fig. 6: ein Blockschaltbild des Aufbaus der Sensormittel, der Steuereinheit und der Aktuatorik.

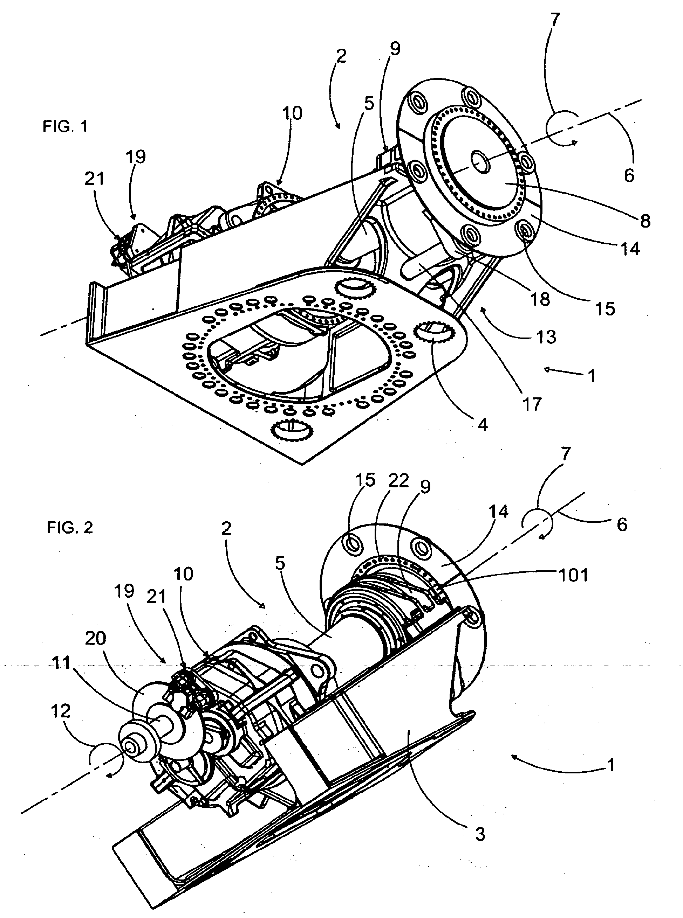

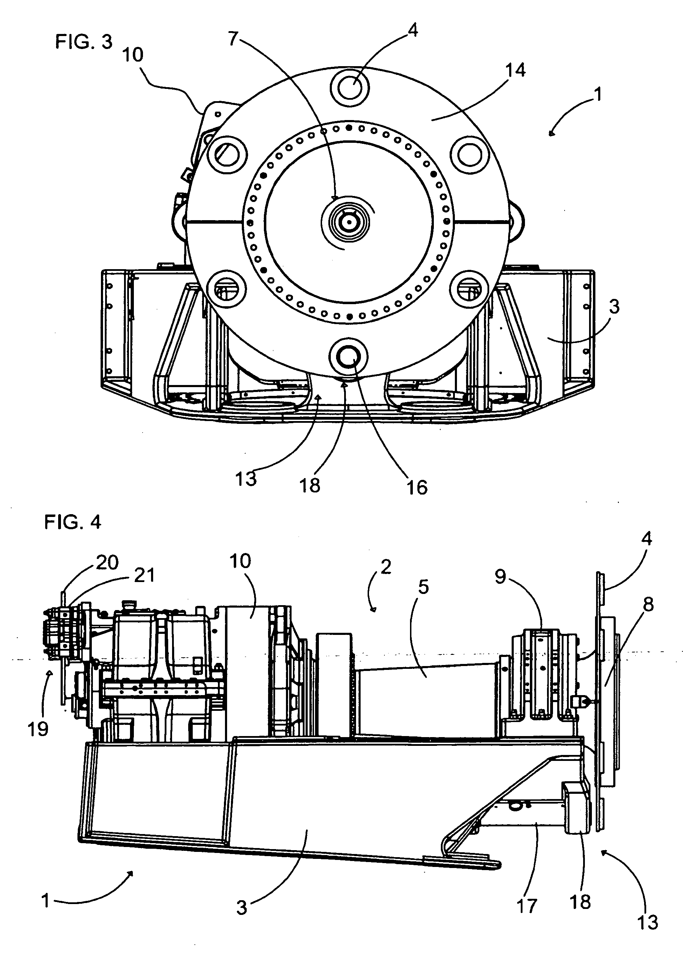

In den Fig. 1 bis 4 ist eine Ausführungsform der Erfindung in verschiedenen Ansichten verdeutlicht. Die Arretierungsvorrichtung 1 wirkt zwischen einem Triebstrang 2 und einem Maschinenträger 3 der hier nicht vollständig dargestellten Windturbine. Ein Maschinenhaus umfasst den Maschinenträger 3 und ist mittels eines nicht dargestellten Azimutlagers drehbar auf dem nicht dargestellten Turm gelagert. Öffnungen 4 im Maschinenträger 3 dienen dazu, Azimutantriebe aufzunehmen, die im Zusammenwirken mit einem drehfesten Zahnkranz des Azimutlagers die Windnachführung des Maschinenhauses darstellen.

In den Figuren sind die wesentlichen Teile des Triebstrangs 2 dargestellt, wobei eine Rotorwelle 5 über ein Rotorlager 9 und über ein Getriebe 10 drehbar um eine Drehachse 6 auf dem Maschinenträger 3 gelagert ist. Die Drehachse 6 des Rotors der Windturbine gilt im Folgenden als Bezugsystem bei geometrischen Angaben. Das Getriebe 10 dient dazu, die eingehende Drehbewegung 7 der Rotorwelle 5, welche eine niedrige Drehzahl und ein hohes Moment aufweiset, in eine ausgehende Drehbewegung 12 mit einem niedrigeren Moment und mit höherer Drehzahl umzuwandeln. Diese kann über eine schnelle Abtriebswelle 11 an einen hier nicht dargestellten Generator zur Stromgewinnung weitergeleitet werden. Dadurch bedingt, fungiert das Getriebe 10 als Drehmomentabstützung für die Rotorwelle 5, wobei das Gehäuse des Getriebes 10 sich über nicht dargestellte Lagerblöcke auf dem Maschinenträger 3 abstützt.

An der Rotorwelle 5 ist ein Wellenflansch 8 vorgesehen, an welchem die Rotornabe des hier nicht dargestellten Rotors mittels einer Vielzahl von Schrauben befestigbar ist. Direkt an den Wellenflansch 8 schließt sich eine mit der Rotorwelle 5 drehfest verbundene Arretierungsscheibe 14 der Verriegelungsmittel 13 an. Die Arretierungsscheibe 14 weist eine Vielzahl von axial verlaufenden Aufnahmen 15 auf, und ist - einem einfachen Austausch geschuldet - zweigeteilt ausgeführt. Neben der Arretierungsscheibe 14 mit den Aufnahmen 15 umfassen die Verriegelungsmittel 13 einen Arretierungsbolzen 16, der axial verschiebbar in einer Bolzenführung 17 am Maschinenträger 2 gelagert ist. Im verriegelten Zustand werden zum Teil erhebliche Kräfte über den Arretierungsbolzen 16 und über die Bolzenführung 17 in den Maschinenträger 2 eingeleitet, beispielsweise verursacht durch Windböen. Deshalb ist am Maschinenträger 3 im Bereich der Bolzenführung 17 eine Verstärkung 18 vorgesehen. Der Arretierungsbolzen 5 wird vorzugsweise elektromechanisch betätigt. Dies hat den Vorteil gegenüber einer hydraulischen Betätigung, dass keine Leckage eines Betätigungsmediums - wie zum Beispiel Öl - ungewollt in das Maschinenhaus gelangen kann.

Die schnelle Abtriebswelle 11 des Getriebes 4 ist mit einer Reibungsbrems-vorrichtung 19 beaufschlagbar. Diese Reibungsbremsvorrichtung 19 umfasst einen eine Bremsscheibe 9 axial umgreifenden Bremssattel 21. Dieser ist elektromechanisch - mit Hilfe eines Elektromotors - bei einstellbarerer Betätigungskraft, zuspannbar. Indem der Strom des Elektromotors gemessen wird, kann ein Rückschluss über die Betätigungskraft gezogen werden, da Strom und Drehmoment des Motors in einem bekannt Verhältnis zueinander stehen. Es können auch andere Messverfahren und - Elemente für die Betätigungskraft zum Einsatz kommen.

In dem Ausführungsbeispiel gemäß den Fig. 1 bis 4 ist direkt am Rotorlager 9 ein Sensormittel 101 vorgesehen, welches als integrierter Geschwindigkeitssensor 101 ausgebildet ist. Dieser kann die Position, die Drehrichtung und die Geschwindigkeit der Rotorwelle 5 anhand von rotationsproportionalen Signalen detektieren, welche von drehfest mit der Rotorwelle verbundenen Gebermitteln 22 erzeugt werden. Denkbar ist es, in dem Wellenflansch 8 oder in der Arretierungsscheibe 14 mehrer geometrische oder magnetische Variationen 22, über den Umfang verteilt, baulich vorzusehen. Dazu können die Sensormittel 101 als magnetischer Sensor 101 dargestellt sein, der eine drehproportionale Fluktuation eines Magnetfeldes detektiert und eine dazu proportionale Spannung ausgibt.

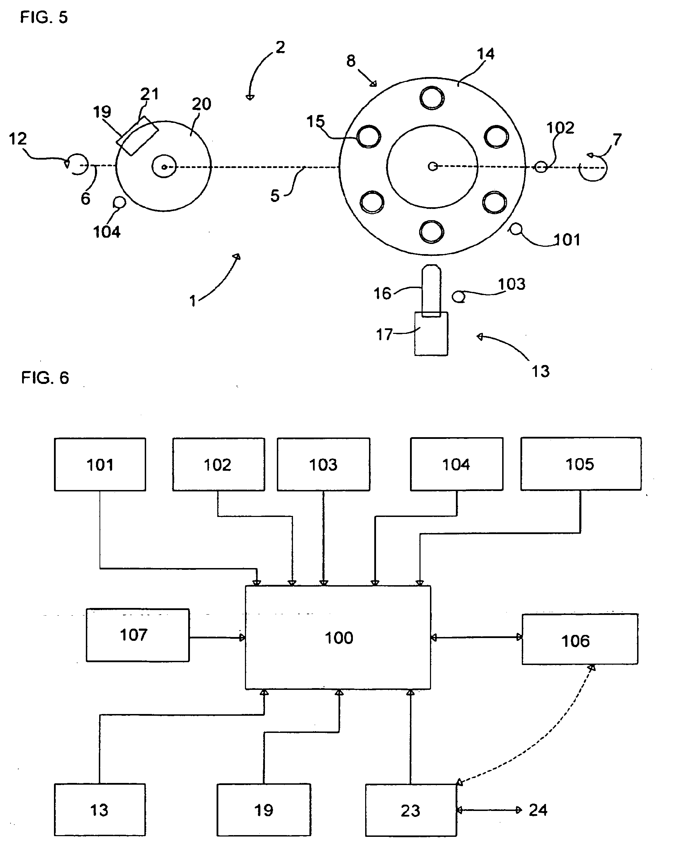

In Fig. 5 ist eine leicht variierte Ausführungsform angeführt, wobei die Sensormittel 101 zur Messung der Drehgeschwindigkeit als zusammenwirkende Positionssensoren 101 und 102 mit einem festen Winkelabstand zueinander ausgebildet sind. Weiterhin wird hier der Wirkungszusammenhang der Arretierungsvorrichtung 1 anhand der schematischen Darstellung in Fig. 5 mit dem Blockschaltbild in Fig. 6 unterstrichen. Die Sensormittel 101 und 102 ermöglichen die Aufnahme der Drehrichtung, Position und Drehgeschwindigkeit der Rotorwelle 5, die Sensormittel 103 stellen die momentane Position und Zustand der Verriegelungsmittel 13 bereit. Die Drehgeschwindigkeit der schnellen Abtriebswelle 11 oder der Bremsscheibe 20 wird mit Hilfe der Sensormittel 104 gemessen. Die Bremsscheibe 20 und die Arretierungsscheibe 14 sind über den hier durch eine Strichlinie repräsentierten Triebstrang 2 geometrisch miteinander verschränkt. Somit kann die Drehgeschwindigkeit der Rotorwelle 5 auch über einen Geschwindigkeitssensor 104 an der Reibungsbremsvorrichtung 19 bestimmt werden. Die Messung der Geschwindigkeit und der Position an der schnellen Abtriebswelle, bewirkt eine höhere Auflösung der Messdaten hinsichtlich.

In Fig. 6 werden Sensormittel 105 durch einen Block dargestellt, welcher ein auf dem Maschinenhaus installiertes Anemometer 105 repräsentiert. Die Geschwindigkeit des Windes, welcher den Rotor der Windturbine beaufschlagt, ist eine maßgebliche Größe, um den Rotor gezielt abzubremsen und zu arretieren. Denn die Windgeschwindigkeit beeinflusst hauptsächlich die Wirkung einer aerodynamischen Bremsvorrichtung 24, wenn die Rotorblätter bremsend gegen den Wind angestellt werden. Dabei wird mittels eines Pitchantriebs der Anstellwinkel 23 der Rotorblätter so gewählt, dass ein der vorliegenden Drehbewegung 7 entgegen wirkendes Rotormoment erzeugt wird. Die Steuereinheit 100 ist weiterhin mit als Winkelgeber ausgebildeten Sensormitteln 106 verbunden, um den Anstellwinkel 23 zu kennen.

Die Sensorsignale der unterschiedlichen Sensormittel 101, 102, 103, 104, 105 und 106 werden in einer Steuereinheit 100 zusammengeführt, welche daraus die einzelnen Komponenten, insbesondere die aerodynamische Brems- oder Beschleunigungsvorrichtung 24 und die Reibungsbremsvorrichtung 19, gezielt ansteuert, um die Rotorwelle in eine Verriegelungsposition zu bewegen und dort anzuhalten. Sobald die Rotorwelle sich in der SOLL-Position befindet, veranlasst die Steuereinheit 100 die Arretierung der Windsturbine mit Hilfe der Verrieglungsmittel 13.

Im einzelnen ist der Ablauf einer Arretierung der Windturbine wie folgt zu beschreiben: Wird von einem Benutzer oder durch einen sonstigen initialisierenden Vorgang die Arretierung des Rotors veranlasst, so wird die Steuereinheit 100 die Signale der Sensormittel 101, 102, 103, 104, 105 und 106 aufnehmen und auswerten. Auf Basis der vorliegenden Position, der Drehrichtung und der Drehgeschwindigkeit des Rotors und der Rotorwelle 5, und auf Basis des Anstellwinkels 23 der Rotorblätter und der Windgeschwindigkeit, berechnet die Steuereinheit 100 eine Beschleunigungs- und Verzögerungsstrategie zur Abbremsung des Rotors in SOLL-Position. Befindet sich die Windturbine bei wenig Wind im Trudelbetrieb, so werden der Rotor und die Rotorwelle 5 durch einen günstigen Anstellwinkel 23 der Rotorblätter zuerst in Rotation versetzt. Nachdem ein SOLL- und IST-Vergleich der Position der Rotorwelle 5 vorgenommen ist, kann die Reibungsbremsvorrichtung 19 und die aerodynamische Bremsvorrichtung 24 von der Steuereinheit 100 aktiviert werden. Unter iterativer Beobachtung der Position des Rotors und Ansteuern der Bremsvorrichtungen 19, 24 - unter Umständen auch durch Vornehmen einer Abschätzung über den Abbremsvorgang - wird die Rotorwelle in einer SOLL-Position angehalten. Dabei wird auch die Betätigungskraft der Reibungsbremsvorrichtung 19 überwacht und entsprechend angepasst. Die elektromechanisch betätigbare Reibungsbremsvorrichtung 19 ist derart schnell und fein ansteuerbar, dass unter Umständen kurz vor Erreichen der SOLL-Position der Rotorwelle 5 von einer kontinuierliche Drehbewegung 7 oder 12 der Rotorwelle 5 oder der Abtriebswelle 11 in eine hoch feine Slip-Stick-Drehbewegung übergegangen wird. Dabei tastet sich die Steuereinheit 100 und der Triebstrang 2 inkremental an die SOLL-Position heran, um dann bei Erreichung derselben, vollständig und dauerhaft abzubremsen. Diese alternierende Start-Stop-Bewegung der Rotorwelle 5 und/oder der Bremsscheibe 20 bzw. Abtriebswelle 11 bietet erstmals eine feine Möglichkeit, die SOLL-Position anzufahren. Weiterhin kann hierbei die Elastizität des Triebstrangs 2 bzw. des Getriebes 10 genutzt werden, so dass sich der Rotor und die Rotorwelle 5 kontinuierlich zur SOLL-Position heranbewegen, jedoch die Abtriebswelle 11 eine alternierende Start-Stop-Bewegung durchführt.

Wenn die Aufnahme 15 der Arretierungsscheibe 14 mit dem Arretierungsbolzen 16 fluchtet, und die Rotorwelle 5 in der SOLL-Position ist, startet die Steuereinheit 100 den eigentlichen Arretierungsvorgang, indem die Verriegelungsmittel 13 angefahren werden. Im Speziellen wird der Arretierungsbolzen 100 aus der Bolzenführung 17 herausgefahren und in die dazu fluchtende Aufnahme 15 in der Arretierungsscheibe 14 eingeführt wird. Mittels der Sensormittel 103 wird die Position der Verriegelungsmittel 13 überprüft, und wenn die Arretierungsvorrichtung 1 den Rotor 5 wirksam blockiert und feststellt, so gibt die Steuereinheit 100 ein entsprechendes Signal an eine Schnittstelle 107 weiter. Diese Schnittstelle 107 kann direkt einen Benutzer ansprechen, beispielsweise per Licht- oder Tonsignal, oder ein Signal an eine weitere Steuereinheit übergeben.

Die in den beschriebenen Ausführungsbeispielen offenbarte Merkmals-kombinationen sollen nicht limitierend auf die Erfindung wirken, vielmehr sind auch die Merkmale der unterschiedlichen Ausführungen miteinander kombinierbar.

### Bezugszeichenliste

- 1: Arretierungsvorrichtung
- 2: Triebstrang
- 3: Maschinenträger
- 4: Öffnungen
- 5: Rotorwelle
- 6: Drehachse
- 7: Drehbewegung
- 8: Wellenflansch
- 9: Rotorlager
- 10: Getriebe
- 11: Abtriebswelle
- 12: Drehbewegung
- 13: Verriegelungsmittel
- 14: Arretierungsscheibe
- 15: Aufnahmen
- 16: Arretierungsbolzen
- 17: Bolzenführung
- 18: Verstärkung
- 19: Bremsvorrichtung
- 20: Bremsscheibe
- 21: Bremssattel
- 22: Gebermittel
- 23: Anstellwinkel
- 24: Brems- oder

### Beschleunigungsvorrichtung

- 100: Steuereinheit
- 101: Sensormittel
- 102: Sensormittel
- 103: Sensormittel
- 104: Sensormittel
- 105: Sensormittel
- 106: Sensormittel
- 107: Schnittstelle

## Patentansprüche

1. Arretierungsvorrichtung für Windturbine,
- wobei eine Rotorwelle eines Triebstrangs drehbar an einem Maschinenträger der Windturbine vorgesehen ist,
- die Rotorwelle mit einem Rotor verbindbar ist,
- mit Verriegelungsmitteln, mit welchen eine drehfeste Verbindung zwischen der Rotorwelle und dem Maschinenträger mittels eines Formschlusses erzeugbar ist,
- indem eine Drehstellung der Rotorwelle in einer SOLL-Position automatisch detektierbar ist,
- und bei einem Erreichen der SOLL-Position die Verriegelungsmittel automatisch in Eingriff bringbar sind,
- mit mindestens einer Bremsvorrichtung zur Beaufschlagung des Triebstrangs,
- mit einer Steuereinheit (100),
- und mit Sensormittel (101, 102, 104) zum Erfassen einer Drehgeschwindigkeit der Rotorwelle (5),
**dadurch gekennzeichnet, dass**
- die Steuereinheit (100) mindestens mit Sensormitteln (101,102, 103, 104) zum Erfassen einer Position, Drehrichtung, Drehgeschwindigkeit der Rotorwelle (5) und des Status der Bremsvorrichtung (19) verbunden ist,
- und wobei mindestens die Bremsvorrichtung (19, 24) von der Steuereinheit (100) mittels Sensordaten der Sensormittel (101, 102, 103, 104, 105, 106) derart ansteuerbar ist, dass die Rotorwelle (5) zum kompletten Stillstand in der SOLL-Position abgebremst wird.

2. Arretierungsvorrichtung nach Anspruch 1, **dadurch gekennzeichnet, dass** die Sensormittel (101, 102) zum Erfassen der Position, der Drehgeschwindigkeit und der Drehrichtung, eine Vielzahl von Rotorpositionssensoren (101, 102), insbesondere zwei, umfassen.

3. Arretierungsvorrichtung nach einem oder mehreren der voran gestellten Ansprüche, **dadurch gekennzeichnet, dass** die Verriegelungsmittel (13) einen verschiebbaren Arretierungsbolzen (16) umfassen, und Sensormittel (103) zum Erfassen der Position des Arretierungsbolzens (16) vorgesehen sind.

4. Arretierungsvorrichtung nach einem oder mehreren der voran gestellten Ansprüche, **dadurch gekennzeichnet, dass** die Bremsvorrichtung (19) als Reibungsbrems-vorrichtung (19) ausgebildet ist, und Sensormittel zum Erfassen des Status der Reibungsbremsvorrichtung (19) vorgesehen sind.

5. Arretierungsvorrichtung nach Anspruch 4, **dadurch gekennzeichnet, dass** der Triebstrang (2) ein Getriebe (10) mit einer schnellen Abtriebswelle (11) und eine Bremsscheibe (20) umfasst, welche von der Bremsvorrichtung (19) beaufschlagbar ist.

6. Arretierungsvorrichtung nach Anspruch 5, **dadurch gekennzeichnet, dass** Sensormittel (104) zum Erfassen der Position und/oder der Drehgeschwindigkeit der schnellen Abtriebswelle (11) oder der Bremsscheibe (20) vorgesehen sind.

7. Arretierungsvorrichtung nach einem oder mehreren der voran gestellten Ansprüche, **dadurch gekennzeichnet, dass** Sensormittel (105) zum Erfassen einer Windgeschwindigkeit vorgesehen sind.

8. Arretierungsvorrichtung nach einem oder mehreren der voran gestellten Ansprüche, **dadurch gekennzeichnet, dass** ein Anstellwinkel (23) mindestens eines Rotorblatts variierbar ist, wobei Sensormittel (106) zum Erfassen des Anstellwinkels (23) vorgesehen sind.

9. Verfahren zum Betrieb einer Arretierungsvorrichtung nach einem oder mehreren der voran gestellten Ansprüche, **gekennzeichnet durch** die Schritte,
- Erfassen einer Position, einer Drehrichtung und einer Drehgeschwindigkeit einer Rotorwelle (5) der Windturbine,
- Vergleichen der Position der Rotorwelle (5) mit einer SOLL-Position der Rotorwelle (5),
- Berechnen der benötigten Bremsleistung anhand der Position, der Drehgeschwindigkeit und der Drehrichtung des Rotors,
- Ansteuern mindestens einer Bremsvorrichtung (19, 24), um die Rotorwelle (5) bis zum vollständigen Stillstand in der SOLL-Position abzubremsen, und
- der Status der Bremsvorrichtung (19, 23) erfasst wird.

10. Verfahren nach Anspruch 9, **gekennzeichnet durch** die Schritte,
- Erfassen einer Windgeschwindigkeit, und
- Verstellen eines Anstellwinkels (23) mindestens eines Rotorblatts, so dass ein auf den Triebstrang (2) wirkendes, verzögerndes oder antreibendes Moment erzeugt wird.

11. Verfahren nach Anspruch 9 oder 10, wobei Verriegelungsmittel (13) umfassend ein Arretierungsbolzen (16) derart in Eingriff gebracht werden, dass die Rotorwelle (5) mittels Formschluss drehfest mit dem Maschinenträger (3) verbunden wird, wenn die SOLL-Position der Rotorwelle (5) von einer Steuereinheit (100) detektiert wird.

12. Verfahren nach einem oder mehreren der vorangestellten Ansprüche 9 bis 11, wobei die Rotorwelle (5) oder eine schnelle Abtriebswelle (11) bereits vor dem Erreichen der SOLL-Position der Rotorwelle (5) mindestens bis zum Stillstand abgebremst wird.

13. Verfahren nach Anspruch 12, wobei die SOLL-Position zumindest teilweise durch alternierende Start- und Stoppbewegungen der Rotorwelle (5) oder der schnellen Abtriebswelle (11) erreicht wird.

## Claims

1. Locking device for a wind turbine,
- whereas a rotor shaft of a drive train is rotatably mounted on a main frame of the wind turbine,
- the rotor shaft is connectable to a rotor,
- with locking means being provided to create a torque-proof connection between the rotor shaft and the main frame through form-locking,
- whereas a rotational position of the rotor shaft can be automatically detected (5) in a target position,
- and whereas the locking means can be automatically engaged when reaching the target position,
- with at least one braking device for supplying a braking torque to the drive train,
- with a control unit (100),
- and with sensor means (101, 102, 104) for detecting a rotational speed of the rotor shaft (5),
**characterized in that**
- the control unit (100) is connected to at least sensor means (101, 102, 103, 104) for detecting a position, a rotational direction and a rotational speed of the rotor shaft (5) and the status of the braking device (19),
- and wherein at least the braking device (19, 24) can be controlled by the control unit (100) using sensor data from the sensor means (101, 102, 103, 104, 105, 106) in such that the rotor shaft (5) is decelerated and brought to a complete stop in the target position.

2. Locking device according to claim 1, **characterized in that** the sensor means (101, 102) for detecting the position, the rotational velocity and the rotational direction comprises a multitude of rotor position sensors (101, 102), in particular the sensor means (101, 102) comprises two rotor position sensors (101, 102).

3. Locking device according to one or more of the preceding claims, **characterized in that** the locking means (13) comprises a sliding locking pin (16), and that sensor means (103) for detecting the position of the locking pin (16) are provided.

4. Locking device according to one or more of the preceding claims, **characterized in that** the braking device (19) is a friction brake device (19), and that sensor means for detecting the status of the friction brake device (19) are provided.

5. Locking device according to claim 4, **characterized in that** the drive train (2) comprises a gear box (10) with a fast output shaft (11) and a brake disk (20), which can be acted upon by the braking means (19).

6. Locking device according to claim 5, **characterized in that** sensor means (104) for detecting the position and/or the rotational speed of the fast output shaft (11) or the brake disc (20) are provided.

7. Locking device according to one or more of the preceding claims, **characterized in that** sensor means (105) for detecting a wind speed are provided.

8. Locking device according to one or more of the preceding claims, **characterized in that** an angle of attack (23) of at least one rotor blade can be varied, whereas sensor means (106) for detecting the angle of attack (23) are provided.

9. Method for operating a locking device according to one of the preceding claims, **characterized in** the following steps,
- Detecting a position, a rotational direction and a rotational speed of a rotor shaft (5) of the wind turbine,
- comparing the position of the rotor shaft (5) with a target position of the rotor shaft (5),
- calculating the necessary braking power based on the position, the rotational speed and the rotational direction of the rotor,
- controlling at least one braking device (19, 24), in order to decelerate the rotor shaft and bring it to a complete stop in the target position, and
- detecting the status of the braking means (19, 23).

10. Method according to claim 9 **characterized in** the following steps,
- Detecting a wind speed and
- adjusting an angle of attack (23) of at least one rotor blade, so that a create a decelerating or accelerating torque acting on the drive train.

11. Method according to claim 9 or 10 **characterized in that** locking means (13) comprising a locking pin (16) is brought into engagement in such a manner that the rotor shaft (5) is torque-proof connected through form-locking to the main frame (3) when the target position of the rotor shaft (5) is detected by a control unit (100).

12. Method according to one or more of the preceding claims 9 to 11 **characterized in that** the rotor shaft (5) or a fast output shaft (11) is decelerated and brought to a complete stop before the rotor shaft (5) has reached its target position.

13. Method according to claim 12 **characterized in that** the target position is reached at least partly by alternating start and stop movements of the rotor shaft (5) or the fast output shaft (11).

## Revendications

1. Dispositif d'arrêt pour turbine éolienne,
- un arbre de rotor d'une branche cinématique étant prévu de façon rotative sur un support de machine de la turbine éolienne,
- l'arbre de rotor pouvant être relié à un rotor,
- comprenant des moyens de verrouillage, avec lesquels une liaison solidaire en rotation entre l'arbre de rotor et le support de machine peut être générée au moyen d'une complémentarité de formes,
- du fait qu'une position de rotation de l'arbre de rotor peut être détectée automatiquement dans une position de consigne,
- et que les moyens de verrouillage peuvent être amenés en prise automatiquement lorsqu'on atteint la position de consigne,
- comprenant un moins un dispositif de freinage pour la sollicitation de la branche cinématique,
- une unité de commande (100),
- et des moyens capteurs (101, 102, 104) pour l'enregistrement d'une vitesse de rotation de l'arbre de rotor (5),
**caractérisé en ce que**
- l'unité de commande (100) est reliée à au moins des moyens capteurs (101, 102, 103, 104) pour l'enregistrement d'une position, d'un sens de rotation, d'une vitesse de rotation de l'arbre de rotor (5) et de l'état du dispositif de freinage (19),
- et au moins le dispositif de freinage (19, 24) pouvant être actionné par l'unité de commande (100) au moyen de données de capteur des moyens capteurs (101, 102, 103, 104, 105, 106) de telle sorte que l'arbre de rotor (5) est freiné pour l'arrêt complet dans la position de consigne.

2. Dispositif d'arrêt selon la revendication 1, **caractérisé en ce que** les moyens capteurs (101, 102) comprennent une pluralité de capteurs de position de rotor (101, 102) pour l'enregistrement de la position, de la vitesse de rotation et du sens de rotation.

3. Dispositif d'arrêt selon l'une quelconque ou plusieurs des revendications précédentes, **caractérisé en ce que** les moyens de verrouillage (13) comprennent un boulon d'arrêt (16) coulissant, et des moyens capteurs (103) sont prévus pour l'enregistrement de la position du boulon d'arrêt (16).

4. Dispositif d'arrêt selon l'une ou plusieurs des revendications précédentes, **caractérisé en ce que** le dispositif de freinage (19) est conçu comme dispositif de freinage à friction (19), et des moyens capteurs sont prévus pour l'enregistrement de l'état du dispositif de freinage à frottement (19).

5. Dispositif d'arrêt selon la revendication 4, **caractérisé en ce que** la chaîne cinématique (2) comprend un engrenage (10) avec un arbre de sortie (11) rapide et un disque de frein (20), qui peut être sollicité par le dispositif de freinage (19).

6. Dispositif d'arrêt selon la revendication 5, **caractérisé en ce que** des moyens capteurs (104) sont prévus pour l'enregistrement de la position et/ou de la vitesse de rotation de l'arbre de sortie (11) rapide ou du disque de frein (20).

7. Dispositif d'arrêt selon l'une ou plusieurs des revendications précédentes, **caractérisé en ce que** des moyens capteurs (105) sont prévus pour l'enregistrement d'une vitesse du vent.

8. Dispositif d'arrêt selon l'une quelconque ou plusieurs des revendications précédentes, **caractérisé en ce qu'**un angle d'incidence (23) d'au moins d'une pale de rotor peut varier, des moyens capteurs (106) étant prévus pour l'enregistrement de l'angle d'incidence (23).

9. Procédé pour faire fonctionner un dispositif d'arrêt selon l'une ou plusieurs des revendications précédentes, **caractérisé par** les étapes suivantes :
- enregistrement d'une position, d'un sens de rotation et d'une vitesse de rotation d'un arbre de rotor (5) de la turbine éolienne,
- comparaison de la position de l'arbre de rotor (5) avec une position de consigne de l'arbre de rotor (5),
- calcul de la puissance de freinage utilisée à l'aide de la position, de la vitesse de rotation et du sens de rotation du rotor,
- actionnement d'au moins un dispositif de freinage (19, 24), pour ralentir l'arbre de rotor (5) jusqu'à l'arrêt complet dans la position de consigne, et
- l'état du dispositif de freinage (19, 23) est enregistré.

10. Procédé selon la revendication 9, **caractérisé par** les étapes suivantes,
- enregistrement d'une vitesse du vent, et
- ajustement d'un angle d'incidence (23) d'au moins une pale de rotor, de sorte qu'un couple agissant sur la branche cinématique (2), décélérant ou entraînant est généré.

11. Procédé selon la revendication 9 ou 10, des moyens de verrouillage (13) comprenant un boulon d'arrêt (16) pouvant être mis en prise de telle sorte que l'arbre de rotor (5) est relié par complémentarité de formes de façon solidaire en rotation avec le support de machine (3) lorsque la position de consigne de l'arbre de rotor (5) est détectée par une unité de commande (100).

12. Procédé selon l'une quelconque ou plusieurs des revendications précédentes 9 à 11, l'arbre de rotor (5) ou un arbre de sortie (11) rapide étant freiné au moins jusqu'à l'arrêt avant d'atteindre la position de consigne de l'arbre de rotor (5).

13. Procédé selon la revendication 12, la position de consigne étant atteinte au moins partiellement par des mouvements de démarrage et d'arrêt alternatifs de l'arbre de rotor (5) ou de l'arbre de sortie (11) rapide.
